# EUROPÄISCHE PATENTSCHRIFT

(11) **EP 0 891 300 B1**
(45) Veröffentlichungstag und Bekanntmachung des Hinweises auf die Patenterteilung: **12.04.2000**
(21) Anmeldenummer: 97903218.2
(22) Anmeldetag: 01.02.1997
(51) Int. Cl.: C02F 1/76, C02F 1/78, C02F 9/00

(54) **VERFAHREN ZUR AUFBEREITUNG VON TRINKWASSER FÜR DEN VERBRAUCH**
METHOD OF TREATING DRINKING WATER FOR CONSUMPTION
PROCEDE DE TRAITEMENT D'EAU POTABLE POUR LA CONSOMMATION

(30) Priorität: 14.02.1996 DE 19605422
(43) Veröffentlichungstag der Anmeldung: 20.01.1999
(73) Patentinhaber: PASSAVANT - ROEDIGER UMWELTTECHNIK GmbH, 65322 Aarbergen (DE)
(72) Erfinder: SEEL, Karl, D-65326 Aarbergen (DE)
(86) Internationale Anmeldenummer: EP9700437
(87) Internationale Veröffentlichungsnummer: WO9729996

(56) Entgegenhaltungen:
- EP-A- 0 634 362
- DE-A- 4 338 851
- US-A- 4 049 545
- US-A- 5 376 281
- US-A- 5 547 584

## Beschreibung

Die Erfindung betrifft die Trinkwasseraufbereitung mit den üblichen Verfahrensstufen:
- Als erste Stufe z. B. Schwebstoffentnahme mittels Mikrosiebung oder -filterung mit einer Maschenweite von nicht größer als 40 µm,
- anschließender Ozonisierung und/oder Chlorung und
- Feinststoffentnahme in einem Sandfilter oder dergleichen.

Trinkwasser, das Flüssen, Seen und Talsperren entnommen wird, muß vor dem Verbrauch aufbereitet werden, um die in der Trinkwasserverordnung vorgegebenen Grenzwerte hinsichtlich chemischer Inhaltsstoffe und Trübstoffe einzuhalten. Mit dieser Aufbereitung werden in der Regel die Grenzwerte für die Keimzahl nicht beeinflußt. Die zu Trinkwasser aufbereiteten Wässer enthalten aber oftmals aus gülle- oder fäkalienverschmutzten Abwässern stammende Krankheitserreger, wie z. B. coliforme Keime, sulfitreduzierende sporenbildende Anaerobier und Fäkalstreptokokken. Zur Abtötung dieser Krankheitserreger wird das Wasser üblicherweise gechlort und/oder ozonisiert. Chlorung beeinflußt den Geschmack und den Geruch des Wassers, Ozonisierung ist kostspielig. Diese Verfahrensstufen sollten daher vermieden oder auf ein bezahlbares Minimum verringert werden.

Die Aufgabe, die Entkeimung des Wassers auf einfachere, preiswertere und den Geschmack und Geruch nicht beeinflussende Weise herbeizuführen, wird erfindungsgemäß dadurch gelöst, daß die letzte Verfahrensstufe der Trinkwasseraufbereitung eine Mikrosiebung mit einer Maschenweite von ≤ 3 µm ist.

Siebgewebe mit dieser kleinen Maschenweite können zur Verfügung gestellt werden. Diese kleine Maschenweite ist geeignet, die oben genannten Mikroorganismen fast 100 %ig zurückzuhalten. Die Anwendung dieser Technik auf die Trinkwasseraufbereitung ist neu.

Es ist vorteilhaft, die der Entkeimung dienende Verfahrensstufe mit mindestens einer Rückspüleinrichtung für das Siebgewebe auszurüsten. Die bei der Rückspülung anfallenden Rückspülwässer können insbesondere der ersten Schwebstoffentnahmestufe zugeführt und dort mechanisch behandelt werden.

## Patentansprüche

1. Verfahren zur Aufbereitung von Rohwasser aus Flüssen, Seen oder Talsperren zu Trinkwasser mit Schwebstoffentnahme mittels Mikrosiebung mit einer Maschenweite von höchstens 40 µm, mit anschließender Ozonisierung und/oder Chlorung und mit Feinststoffentnahme in einem Sandfilter, **dadurch gekennzeichnet,** daß als letzte Verfahrensstufe eine Mikrosiebung mit einer Maschenweite von ≤ 3 µm zur Entkeimung eingesetzt ist.

2. Verfahren nach Anspruch 1, **dadurch gekennzeichnet,** daß die Mikrosiebung mit einer Rückspülung der Siebgewebe ausgerüstet ist.

3. Verfahren nach Anspruch 2, **dadurch gekennzeichnet**, daß die Rückspülwässer der Schwebstoffentnahmestufe zugeführt werden.

## Claims

1. Procedure for the potable water treatment for water taken from rivers, lakes or catchment basins consisting in removing the suspended solids by means of micro-screening using a mesh width of max. 40 µm, with subsequent ozonization and/or chlorination and removal of finest particles in a sand filter **characterized in that** the last treatment step consists of a micro-screening with a mesh size of ≤ 3 µm for disinfection purposes.

2. Procedure according to claim 1, **characterized in that** the mirco-screening is equipped with a flushing unit for the screening fabric with reversible flow.

3. Procedure according to claim 2, **characterized in that** the flushing water is introduced into the treatment step for removal of suspended solids.

## Revendications

1. Procédé destiné au traitement d'eaux à potabiliser pour les eaux brutes prélevées des rivières, lacs ou barrages-reservoirs, consistant à éliminer les matières en suspension par microfiltration avec une maille de 40 µm au maximum, avec l'ozonisation subséquente et/ou chloration et avec l'élimination des matières extra-fines dans un filtre au sable, **caractérisé en ce que** la dernière étape de traitement est constituée par une microfiltration pour la désinfection avec une ouverture de toile de ≤ 3 µm.

2. Procédé selon revendication 1, **caractérisé en ce que** la microfiltration est munie d'un lavage à contre-courant pour les toiles filtrantes.

3. Procédé selon revendication 2, **caractérisé en ce que** l'eau de lavage est introduite dans l'étape d'élimination des matières en suspension.
